# EUROPEAN PATENT APPLICATION

(11) **EP 1 241 572 A2**
(43) Date of publication of application: **18.09.2002**
(21) Application number: 02004337.8
(22) Date of filing: 01.03.2002
(51) Int. Cl.: G06F 9/455, G06F 9/54

(54) **Virtual machine integration application program interface**

(30) Priority: 01.03.2001 US 797864
(71) Applicant: SUN MICROSYSTEMS, INC., Palo Alto, California 94303 (US)
(72) Inventor: Igotti, Nikolay, Sunnyvale, California 94086 (US)
(74) Representative: HOFFMANN - EITLE

(57) **Abstract**

The present invention relates to a low-level API for integrating a virtual machine into a host application. According to one or more embodiments of the present invention, the plug-in traditionally used to implement a virtual machine is partitioned into two categories. A first category contains host application specific information. A second category contains host application independent information and contains the virtual machine itself. This allows a developer to interface with the virtual machine in a manner that is removed from the runtime environment that exists in the host application.

## Description

Portions of the disclosure of this patent document contain material that is subject to copyright protection. The copyright owner has no objection to the facsimile reproduction by anyone of the patent document or the patent disclosure as it appears in the Patent and Trademark Office file or records, but otherwise reserves all copyright rights whatsoever.

### BACKGROUND OF THE INVENTION

### 1. FIELD OF THE INVENTION

The present invention relates to an application program interface (API) for integrating a virtual machine (VM) into a generic application.

### 2. BACKGROUND ART

Platform independent programming languages allow a virtual machine to be opened in a host application. The virtual machine creates its own environment within the host application and runs computer programs in its environment without regard to the type of computer system the host application is running. This is useful, for instance, when a person is using the Internet and the virtual machine is opened in a host application such as a web browser. Regardless of the type of host application, however, the virtual machine must be "integrated" into the host application first before programs may be run inside of it. Integration means that the virtual machine must be changed or optimized to operate in the host application or environment. This may require changes to the virtual machine for each different environment in which it is to be used. Virtual machine integration is difficult because host application specific details often must be known by the developer who is integrating the virtual machine.

Before further discussing the drawbacks associated with integrating the virtual machine, an overview of the Internet and platform-independent programming languages is provided.

### INTERNET

The Internet is a network connecting many computer networks and is based on a common addressing system and communications protocol called TCP/IP (Transmission Control Protocol/Internet Protocol). From its creation it grew rapidly beyond its largely academic origin into an increasingly commercial and popular medium. By the mid-1990s the Internet connected millions of computers throughout the world. Many commercial computer network and data services also provided at least indirect connection to the Internet.

The original uses of the Internet were electronic mail (e-mail), file transfers (ftp or file transfer protocol), bulletin boards and newsgroups, and remote computer access (telnet). The World Wide Web (web), which enables simple and intuitive navigation of Internet sites through a graphical interface, expanded dramatically during the 1990s to become the most important component of the Internet. The web gives users access to a vast array of documents that are connected to each other by means of links, which are electronic connections that link related pieces of information in order to allow a user easy access to them. Hypertext allows the user to select a word from text and thereby access other documents that contain additional information pertaining to that word; hypermedia documents feature links to images, sounds, animations, and movies.

The web operates within the Internet's basic client-server format; Servers are computer programs that store and transmit documents (i.e., web pages) to other computers on the network when asked to, while clients are programs that request documents from a server as the user asks for them. Browser software allows users to view the retrieved documents. A web page with its corresponding text and hyperlinks is normally written in HTML or XML and is assigned an online address called a Uniform Resource Locator (URL).

### PLATFORM INDEPENDENT PROGRAMMING LANGUAGE

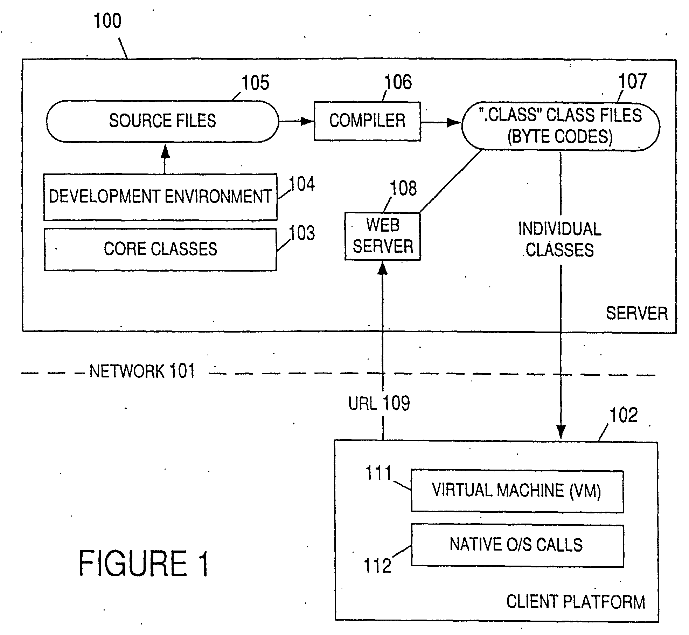

An example of a platform independent programming language is the Java technology platform. A program which utilizes Java technology is composed of a number of classes and interfaces. Unlike many programming languages, in which a program is compiled into machine-dependent, executable program code, programs which utilize Java technology are compiled into machine independent bytecode class files. Each class contains code and data in a platform-independent format called the class file format. The computer system acting as the execution vehicle contains a program called a virtual machine, which is responsible for executing the code in classes. The virtual machine provides a level of abstraction between the machine independence of the bytecode classes and the machine-dependent instruction set of the underlying computer hardware. Figure 1 is a block diagram illustrating a sample network application environment, for instance a Java technology network application environment, comprising a client platform 102 coupled over a network 101 to a server 100 for the purpose of accessing class files for execution of an application or applet.

### SAMPLE NETWORK APPLICATION ENVIRONMENT

In Figure 1, server 100 comprises development environment 104 for use in creating the class files for a given application.

The development environment 104 provides a mechanism, such as an editor and an applet viewer, for generating class files and previewing applets. A set of core classes 103 comprise a library of classes that can be referenced by source files containing other classes. From development environment 104, one or more source files 105 are generated. Source files 105 contain the programmer readable class definitions, including data structures, method implementations and references to other classes. Source files 105 are provided to compiler 106, which compiles source files 105 into compiled ".class" files 107 that contain bytecodes executable by a virtual machine. Bytecode class files 107 are stored (e.g., in temporary or permanent storage) on server 100, and are available for download over network 101.

Client platform 102 contains a virtual machine (VM) 111 which, through the use of available native operating system (O/S) calls 112, is able to execute bytecode class files and execute native O/S calls when necessary during execution. Class files are often identified in applet tags within an HTML (hypertext markup language) document. A web server application 108 is executed on server 100 to respond to HTTP (hypertext transport protocol) requests containing URLs (universal resource locators) to HTML documents, also referred to as "web pages." When a browser application executing on client platform 102 requests an HTML document, such as by forwarding URL 109 to web server 108, the browser automatically initiates the download of the class files 107 identified in the applet tag of the HTML document. Class files 107 are typically downloaded from the server and loaded into virtual machine 111 individually as needed.

It is typical for the classes of a program to be loaded as late during the program's execution as possible; they are loaded on demand from the network (stored on a server), or from a local file system, when first referenced during the program's execution. The virtual machine locates and loads each class file, parses the class file format, allocates memory for the class's various components, and links the class with other already loaded classes. This process makes the code in the class readily executable by the virtual machine.

### VIRTUAL MACHINE INTEGRATION

When developing programs in an environment such as Java environment or another platform independent programming language, there are host application specific problems that arise when trying to integrate the virtual machine. In particular, a developer must deal with the details associated with virtual machine start-up for different platforms. These include setting up environment variables based on the specific runtime environment, loading the correct shared libraries in the correct order, resolving specific symbols, and using specific start-up arguments. This burdens the developer with details that are specific to the host application. Since there are a large number of different host applications, it makes it extremely difficult for a developer to integrate the virtual machine into any specific host application.

In a Java environment, there is a toolkit for developers for use in window environments called the Abstract Window Toolkit (AWT). Integration can become problematic because if the application wishes to cooperate with AWT the native window objects must be passed to AWT for drawing. Also, Java object and native object integration becomes problematic. For sophisticated applications there must also be a way to synchronize execution of Java and native threads. In addition, if it is impossible or undesirable to run the virtual machine in the same process as the host application there must be a speedy and convenient way to perform remote calls.

### SUMMARY OF THE INVENTION

It is an object of the invention to facilitate integration of a virtual machine.

According to an embodiment of the invention, a method for integrating an application program interface into a virtual machine comprises: dividing a plug in into a first and second component wherein said first component has only host application specific information and said second component has only host application independent information; and integrating said virtual machine using said second component.

The virtual machine may be a Java virtual machine. Said first and second components may use a common address space. Further, the first and second components may be provided to not use a common address space and may communicate via a shared memory transport.

A program may be provided having instructions adapted to make a computer carry out the above operations. A computer readable medium may be provided including the program.

Further, a computer program product may comprise: a computer usable medium having computer readable program code embodied therein configured to integrate an application program interface into a virtual machine, said computer program product comprising: computer readable code configured to cause a computer to divide a plug in into a first and second component wherein said first component has only host application specific information and said second component has only host application independent information; and computer readable code configured to cause a computer to integrate said virtual machine using said second component.

Further, a virtual machine integration may comprise: a plug in divided into a first and second component wherein said first component has only host application specific information and said second component has only host application independent information; and a virtual machine configured to be integrated using said second component.

Still further, a system for using an application program interface to integrate a virtual machine into a host application may comprise: a plug in divided into a first and second component wherein said first component has only host application specific information and said second component has only host application independent information; and said virtual machine configured to be integrated into said host application using said second component.

The present invention relates to an API for integrating a virtual machine into a host application. According to one or more embodiments of the present invention, the plug-in traditionally used to implement a virtual machine is partitioned into two categories. A first category contains host application specific information. A second category contains host application independent information and contains the virtual machine itself. This allows a developer to interface with the virtual machine in a manner that is removed from the runtime environment that exists in the host application. This is useful because it allows the developer to make changes to the virtual machine without worrying about compatibility or optimization with specific environments or applications.

In one embodiment, the second category has four main functions. A first function is an API for virtual machine initialization and shutdown, user interface integration, message passing, security hooks, synchronization and extension handling. A second function is an API used to load host application specific code, both native and Java technology code properly, and negotiate shared resources (like capability). A third function is the implementation of libraries in both native and Java code. A fourth function is the implementation of helper libraries (where helper libraries consist of code that is used for integration of the virtual machine into different applications).

From an application point of view, the second category is a shared library which exports only one function JUMP_GetPlugin( ), which returns a pointer to the structure that represents all other functions. In one embodiment, the virtual machine, and hence, the native methods used to integrate the virtual machine with the host application run in the same address space. In another embodiment, the native methods used to integrate the virtual machine with the host application run in a different address space and may communicate via a shared memory transport.

### BRIEF DESCRIPTION OF THE DRAWINGS

These and other features, aspects and advantages of the present invention will become better understood with regard to the following description, appended claims and accompanying drawings where:
- Fig. 1: is a diagram of a sample network application environment.
- Fig. 2: is a flowchart of a low-level API for integrating a virtual machine into a host application according to an embodiment of the present invention.
- Fig. 3: is a flowchart of a low-level API for integrating a virtual machine into a host application according to another embodiment of the present invention.
- Fig. 4: a diagram showing virtual machine integration using a common address space according to an embodiment of the present invention.
- Fig. 5: a diagram showing virtual machine integration using a shared memory transport according to an embodiment of the present invention.
- Fig. 6: shows a virtual machine integration architecture according to an embodiment of the present invention.

### DETAILED DESCRIPTION OF THE INVENTION

The present invention relates to an API for integrating a virtual machine into a host application. In the following description, numerous specific details are set forth to provide a more thorough description of embodiments of the invention. It will be apparent, however, to one skilled in the art, that the invention may be practiced without these specific details. In other instances, well known features have not been described in detail so as not to obscure the invention.

### PARTITIONING

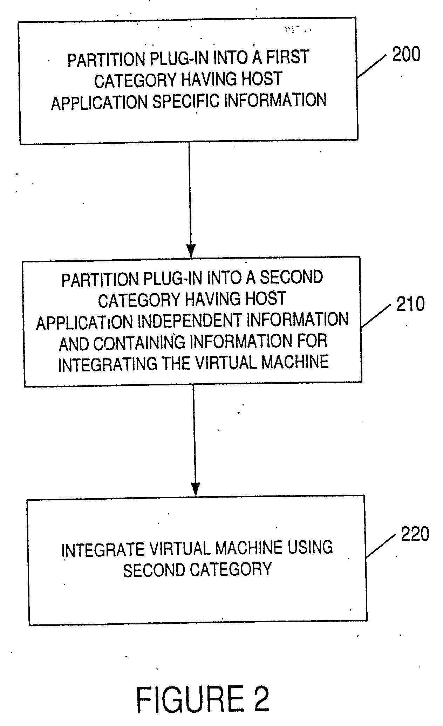

According to one or more embodiments of the present invention, a plug-in is partitioned into two categories. A plug-in is traditionally used to implement an embedded virtual machine. A first partitioned category contains host application specific information. A second category contains host application independent information and contains the virtual machine itself. This allows a developer to interface with the virtual machine in a manner that is removed from the runtime environment that exists in the host application. This embodiment of the present invention is shown in Figure 2.

At operation 200 the traditional plug-in is partitioned into a first category having host application specific information. Then, at operation 210, the plug-in is partitioned into a second category having host application independent information and containing the information for integrating the virtual machine. Thereafter, at operation 220 a developer uses the second category to integrate the virtual machine in a manner that is completely removed from any host application specific information.

In one embodiment, the second category has four main functions. A first function is an API for virtual machine initialization and shutdown, user interface integration, message passing, security hooks, synchronization and extension handling. A second function is an API used to load host application specific code, both native and Java code properly, and negotiate shared resources (like capability). A third function is the implementation of libraries in both native and Java code. A fourth function is the implementation of helper libraries.

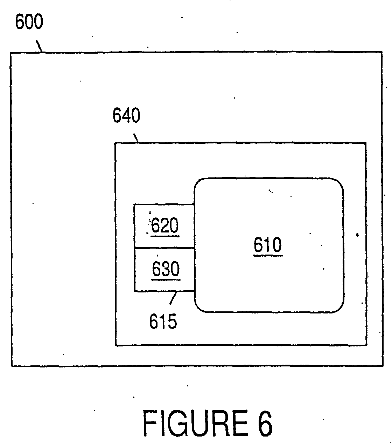

One embodiment of the present invention implements a fixed API between the two categories to allow the implementation of application extensions (such as COM component, plugins, etc.). Appendix A includes a C header file as an example of one embodiment of such a fixed API. Another embodiment of the present invention is shown in Figure 6. The architecture of Figure 6 shows a computing environment 600. Computing environment 600 may be any type of computing environment regardless of operating system and hardware. Computing environment 600 includes a host application 640. The host application 640 may be a web browser or other computer program that uses virtual machine functionality.

The virtual machine 610 is the entity that must be integrated into host application 640. This is done using component 615. Plug-in component 615 is divided into host application independent component 620 and host application dependent component 630. In prior art systems, a developer was forced to deal with the specifics of both components 620 and 630 which made it difficult to integrate the virtual machine 610 into some host applications. Using the architecture shown in the embodiment of Figure 6, however, host application independent component 620 is used by the developer to interface with host application dependent component 630. Since host application dependent component 630 contains details that differ with each type of host application, an interface to component 630 saves the developer from having to learn specific information about different host applications and makes virtual machine integration much easier.

### APPLICATION SIDE

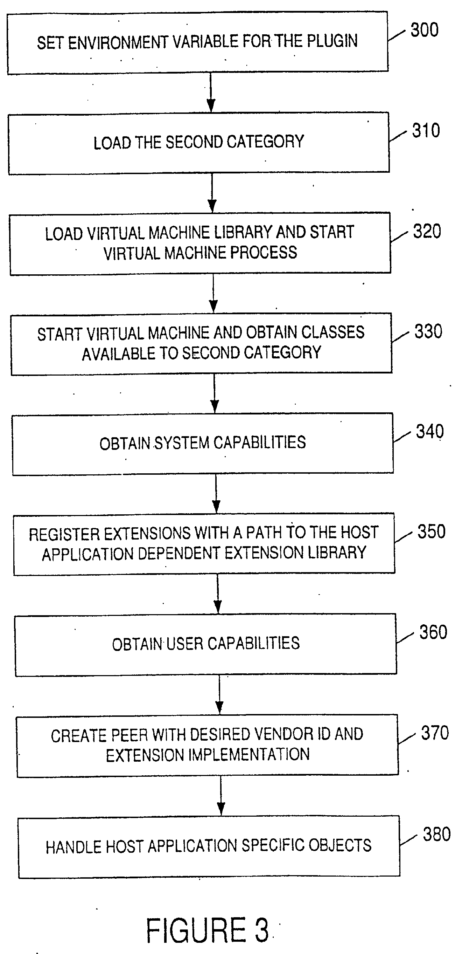

From an application point of view, the second category is a shared library which exports only one function, JVMP_GetPlugin( ). JVMP_GetPlugin( ) returns a pointer to the structure that represents all other functions. It may be used, for example, in the sequence shown in Figure 3 where at operation 300, the environment variable for the plug-in (or appropriate Windows registry key) is set to the location of the second category (i.e., the category having host application independent information). These environment variables include changeable variables in process address space.

From an application point of view, the second category is a shared library which exports only one function, JVMP_GetPlugin( ). JVMP_GetPlugin( ) returns a pointer to the structure that represents all other functions. It may be used, for example, in the sequence shown in Figure 3 where at step 300, the environment variable for the plug-in (or appropriate Windows registry key) is set to the location of the second category (i.e., the category having host application independent information). These environment variables include changeable variables in process address space.

To pass the basic configuration, such as a path to the VM wrapping library, different approaches may be used. In one current reference implementation environmental variables are used, but any other approaches, like configuration files, registry entries may also be used. Environmental variables are chosen in one embodiment as the most portable and easy solution.

At step 310, the second category is loaded. The second category, from the application side is viewed as a shared library or DLL. Loading the second category locates the entry point for the function JVMP_GetPlugin( ). Next, at step 320, a call is made to the JVMP_GetPlugin( ) function which loads the virtual machine library or starts the virtual machine process. Then, at step 330, the virtual machine is started and the classes available in the second category are obtained. Next, the system capabilities required for further operations are obtained at step 340. The system capabilities define the ability to perform system wide actions. The system capabilities provide an entity with the ability to perform an action. An entity can request an extension from a library to allow the entity a capability and the means to authenticate itself. If the authentication is satisfied, the entity gets the ability to perform some action with the library.

Then, the extensions are registered with a path to the host application dependent extension library at step 350. (The extensions allow custom code to be supplied to handle objects specific to the application.) This path contains the Java language native methods of the extension, and extension specific information used by the second category to initialize this extension. Thereafter, the user capabilities are obtained at step 360. Then a peer is created at step 370 with the desired vendor ID and extension implementation version. Finally, host application specific objects are handled at step 380. After completion of operation with a given extension and destruction of all extension specific objects, the extension is typically unregistered.

### INTERNAL STRUCTURE

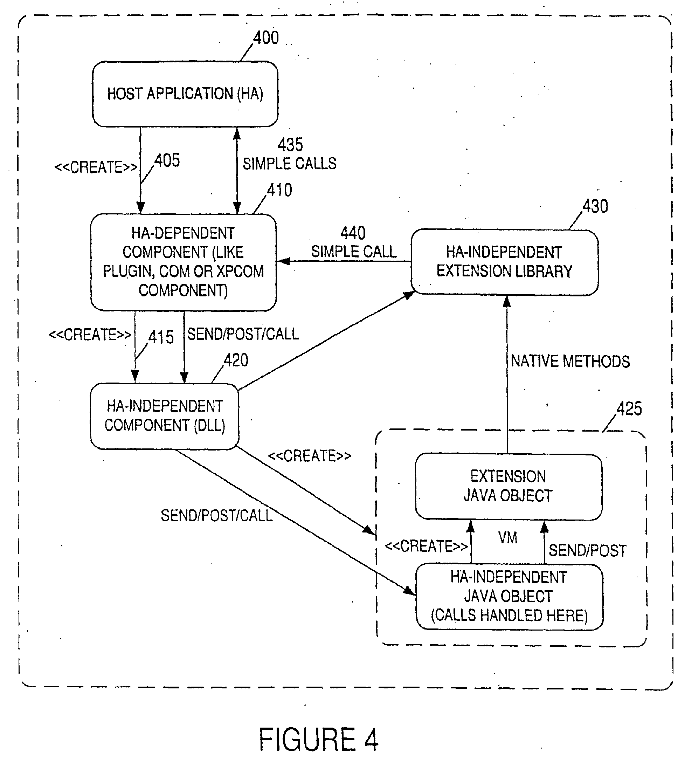

In one embodiment an in-process library is available to extension developers where the host application dependant and host application independent components operate in a common address space. In another embodiment, a remote library is available to extension developers as well that passes requests to the JVM using a shared memory transport. In-process is illustrated by the diagram of Figure 4. Consider the case where a host application 400 encounters something that requires Java functionality, for instance where the host application 400 is a web browser that encounters an applet. Then, the host application must create a component that handles applets.

To create a component that handles applets, an initialization process occurs where the host application makes a create call 405 (an object pointer) to a host application dependant component 410. The host application dependant component 410 loads, via a create call 415, a host application independent component 420. The host application independent component then internally creates the VM 425 and the host application dependent extension library 430 that is specific for the host application dependant component 410 and the initialization is complete.

Now, consider the case where the host application 400 needs to show the applet. To show the applet, the host application 400 makes a call 435 to the host application dependent component 410 telling it to render the applet with its given parameters. The call may be performed from C, C++, or another suitable programming language. In response, the host application dependent component 410 uses the host application independent component 420 to create an applet.

Component 420 calls the host application dependent extension 430. The extension 430 calls back if it needs additional information. When the applet needs functionality from the host application (i.e., web browser) it calls the proper extension method which calls the host application dependent component.

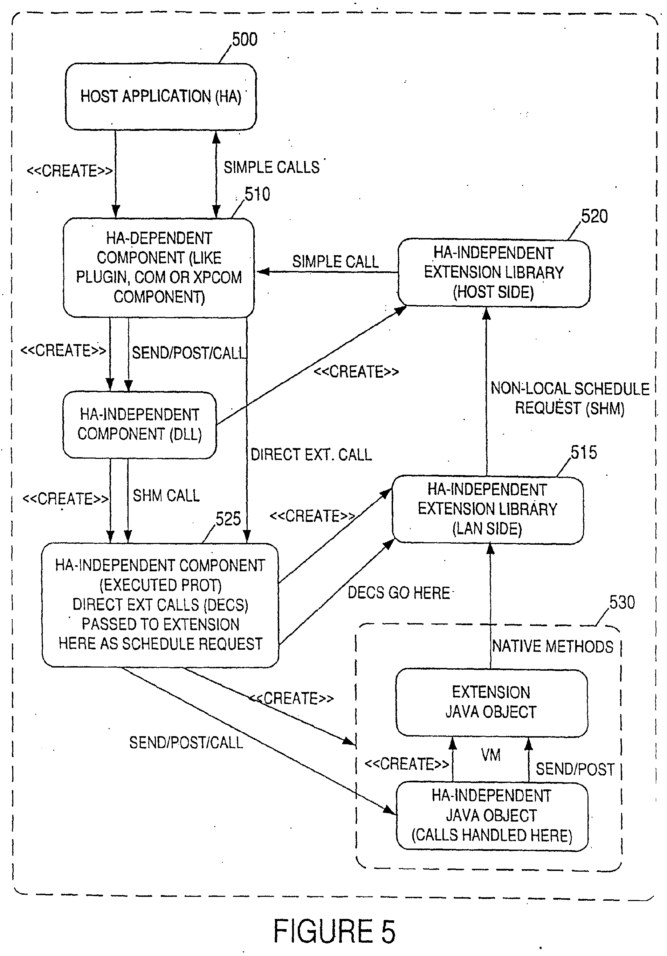

The remote library is shown in Figure 5 where there is not a common address space between host application dependent and independent components. This diagram is similar to Figure 4, but host application independent component 500 cannot make calls directly into host application dependent component 510 because they exist in different address spaces. In this case there must be a common method to communicate between the extension library on the VM side 515 and the extension library on the host side 520.

To do so, host application independent component 500, when needed, creates a separate process 525, which has the VM 530 inside and uses shared memory as the transport medium. Then, host application calls are similar, except, when a non-trivial call is made from the VM side 515, it cannot be handled directly as a message. Instead a remote bridge is created for a direct extension call. (The remote bridge operates by passing arguments by reference (i.e. address) to a called object, solving the problem where there is no common address space). Without common address space pointers from one process are invalid in another, thus, in a two-process case everything that is needed must be passed by value. For two process cases, a special channel is needed to assist the host application in handling asynchronous VM side requests. In one embodiment, a listener on a message queue (or on another transport) is used.

It is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment, a program may be provided having instructions adapted to cause data processing means to carry out the operations of the above embodiments. Further, a computer readable medium may be provided in which the program is embodied.

Thus, an API for integrating a virtual machine into a host application is described in conjunction with one or more specific embodiments. The invention is defined by the claims and their full scope of equivalents.

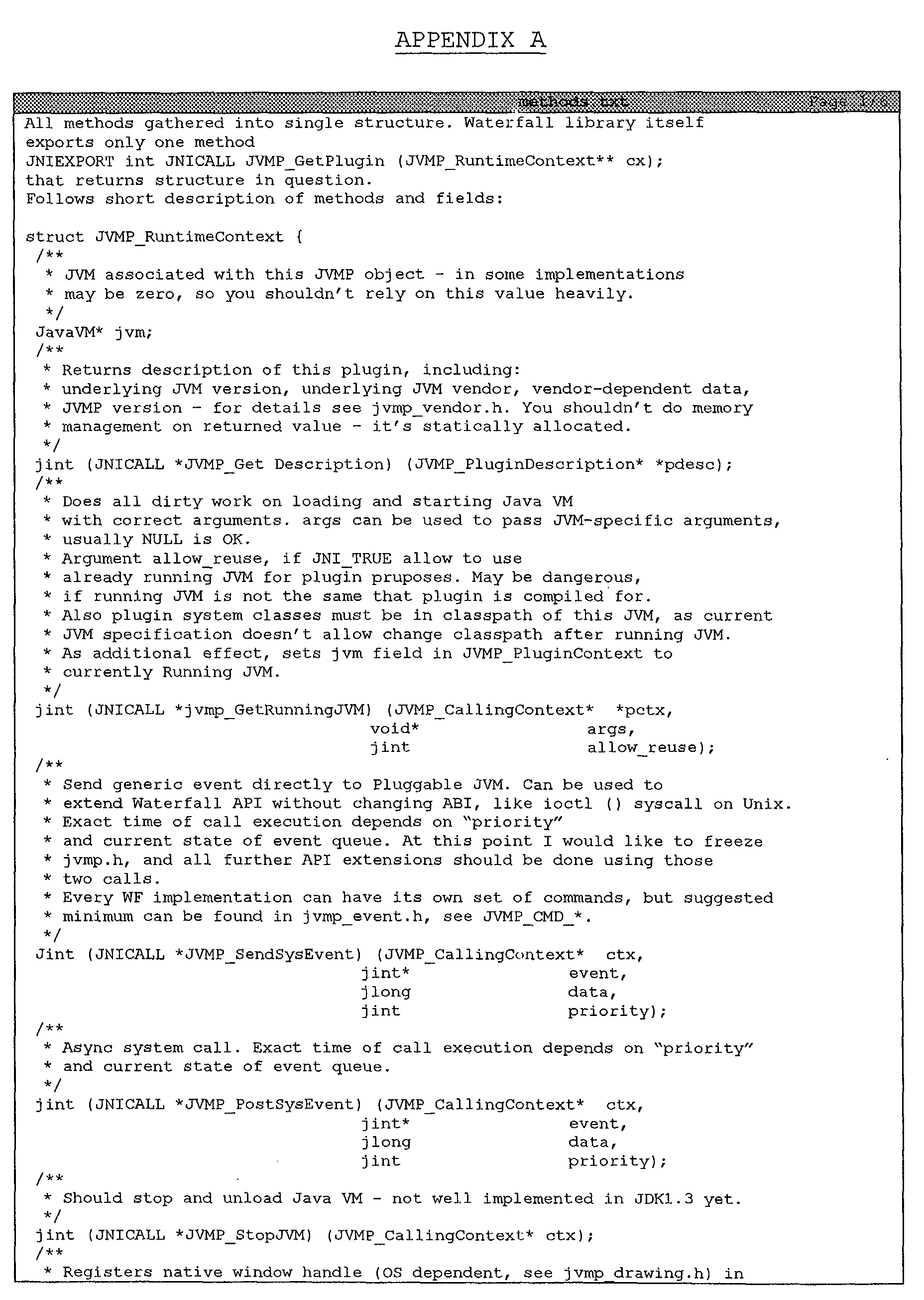

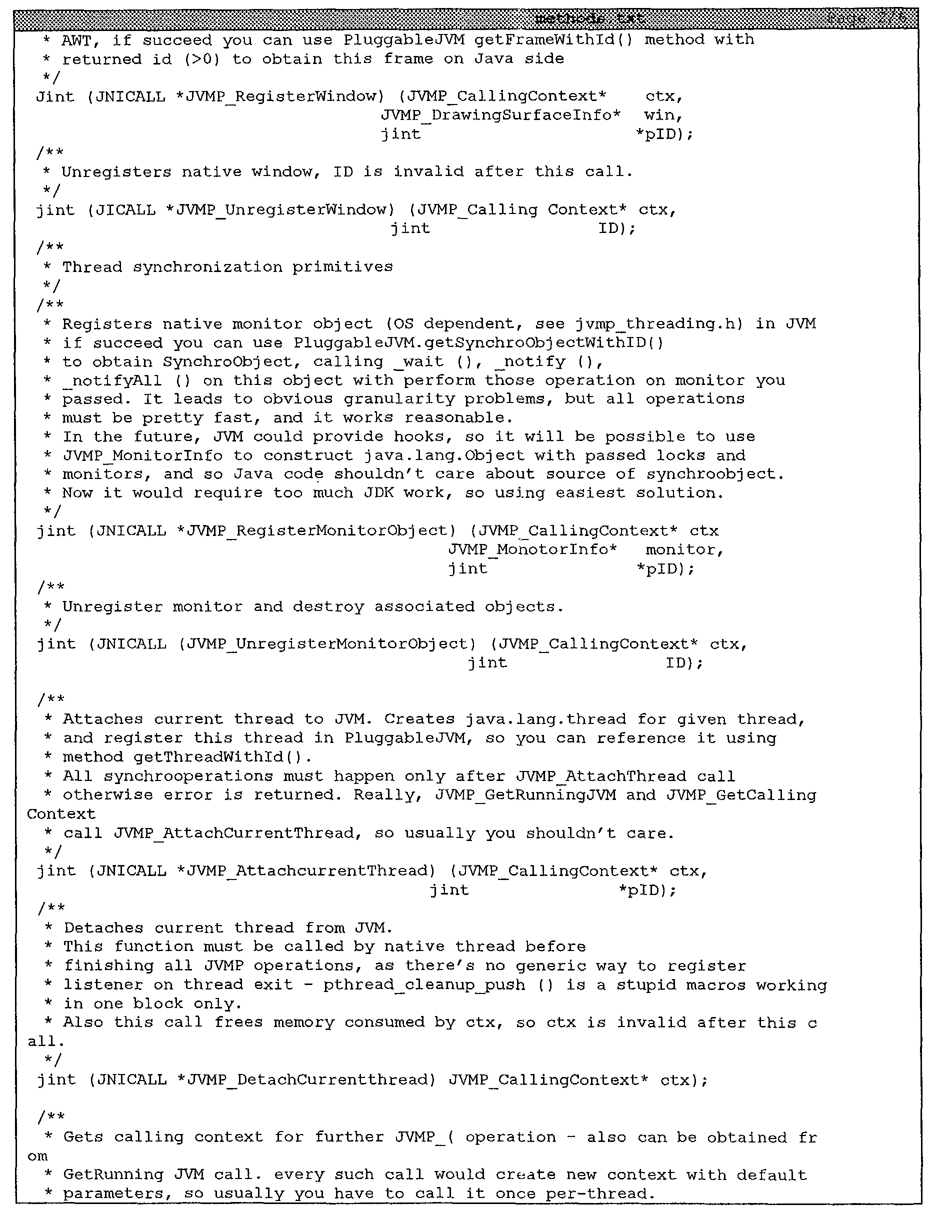

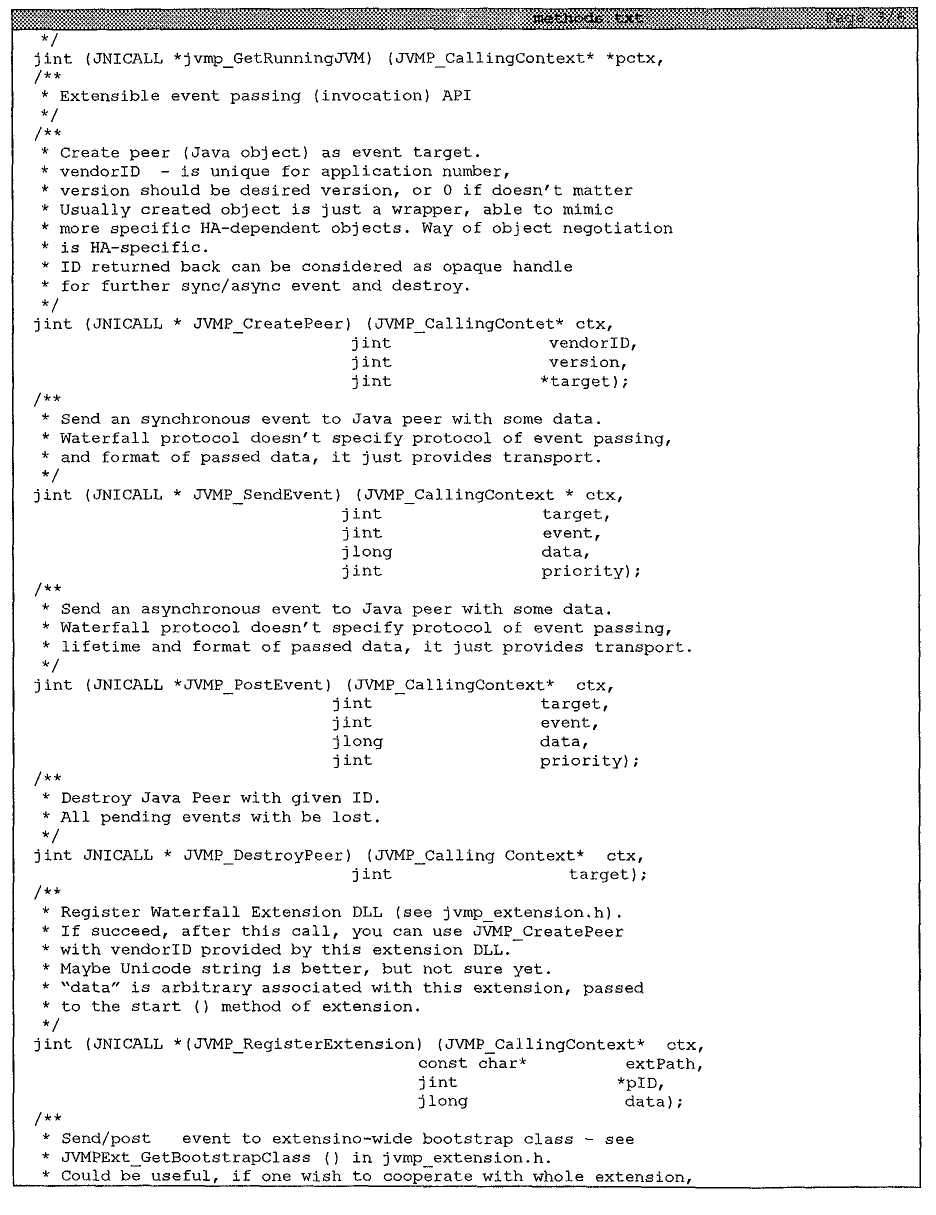

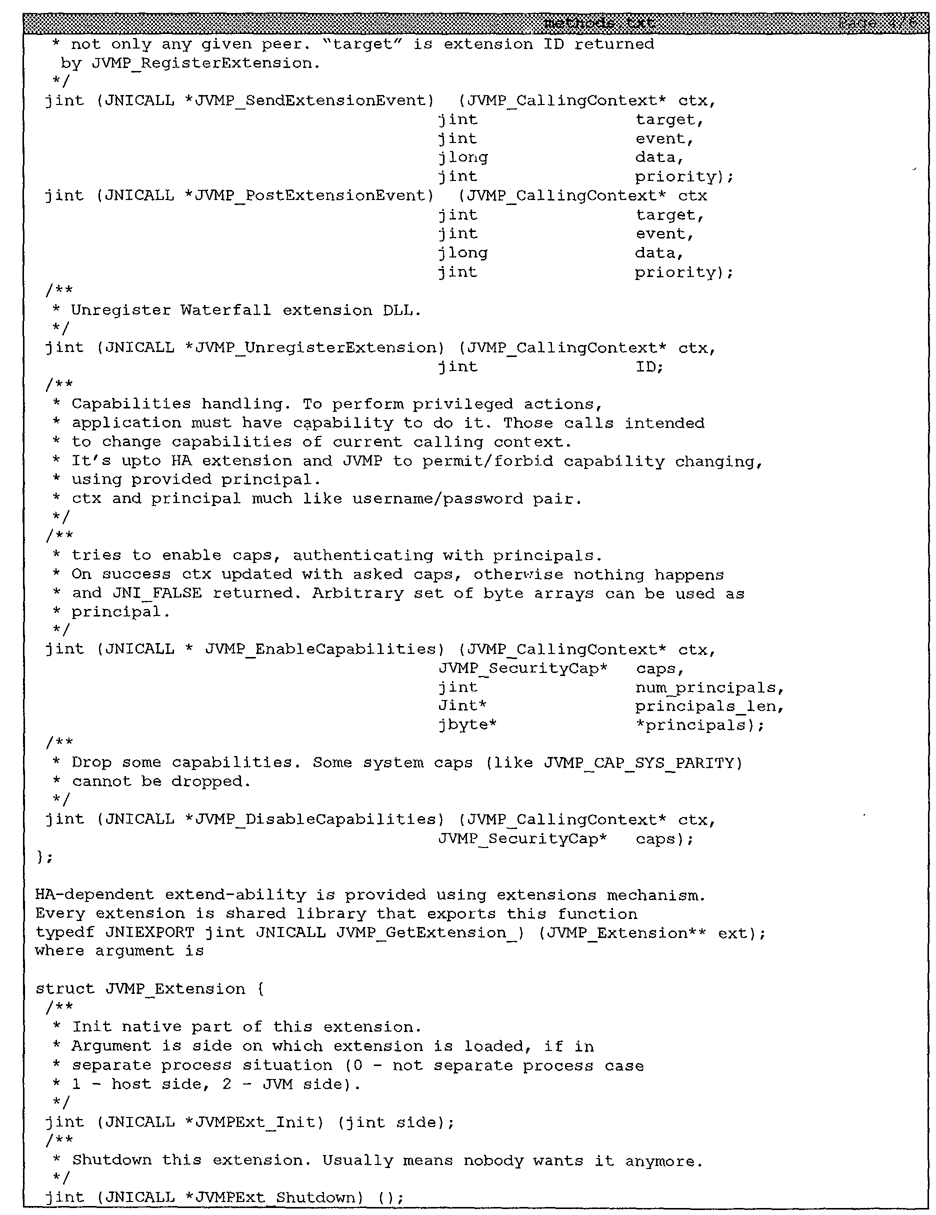

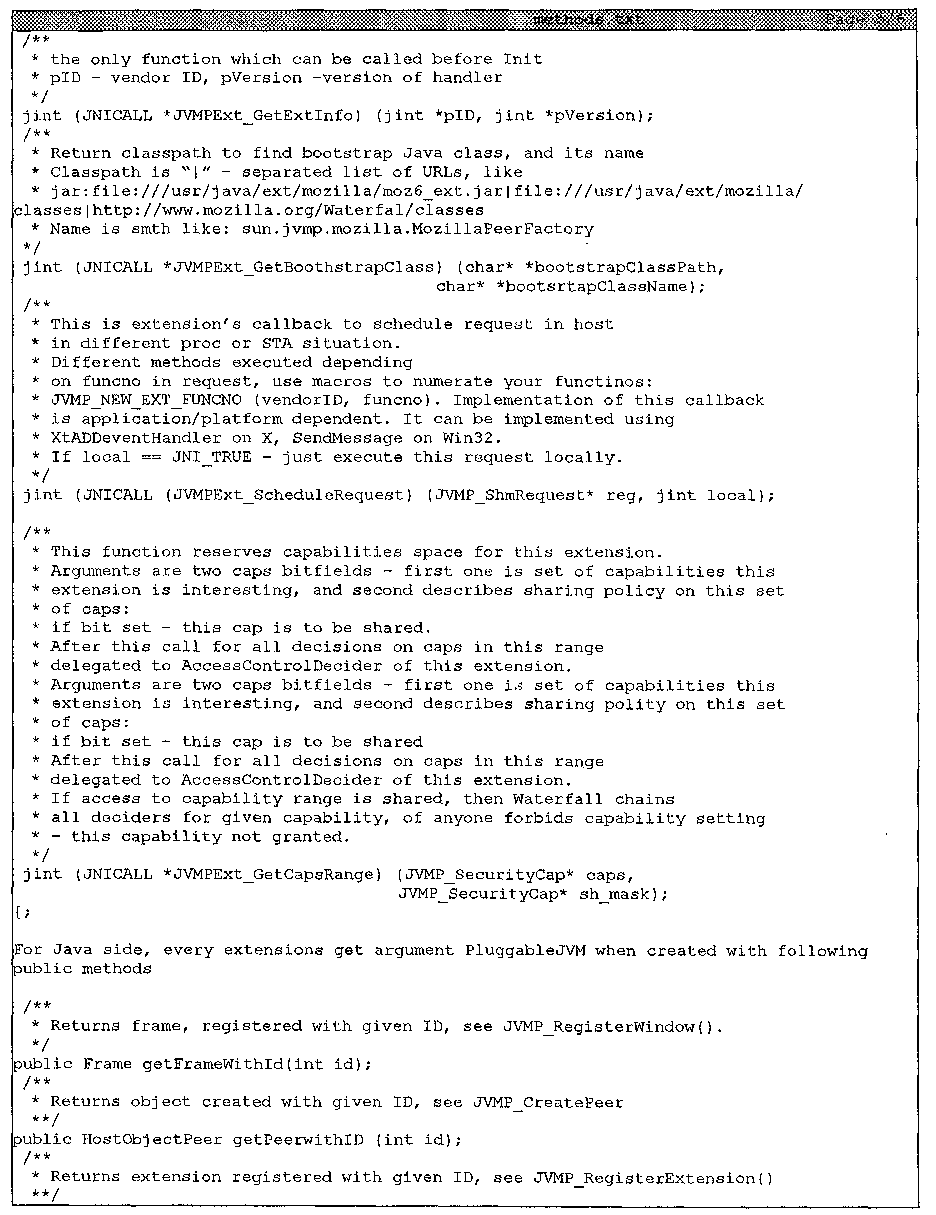

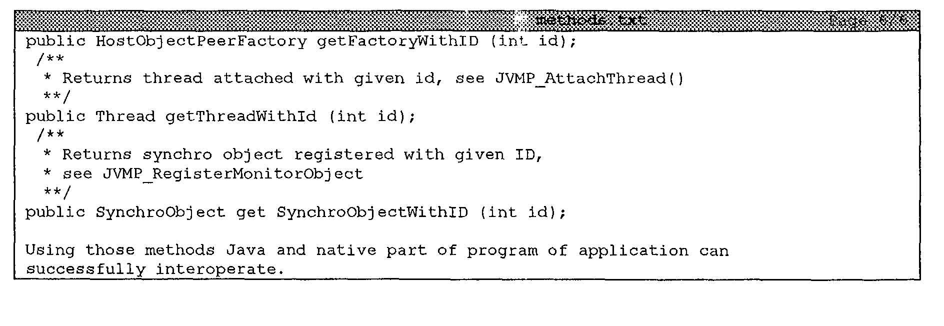

## Claims

1. A method for integrating an application program interface into a virtual machine comprising:
dividing a plug in into a first and second component wherein said first component has only host application specific information and said second component has only host application independent information; and
integrating said virtual machine using said second component.

2. The method of claim 1 wherein said virtual machine is a Java virtual machine.

3. The method of at least one of the claims 1 and 2 wherein said first and second components use a common address space.

4. The method of at least one of the preceding claims wherein said first and second components do not use a common address space.

5. The method of claim 4 wherein said first and second components communicate via a shared memory transport.

6. A program having instructions adapted to make a computer carry out the method of at least one of the claims 1 - 6.

7. A computer readable medium, in which a program is embodied, where the program is to make a computer execute the method of at least one of the claims 1 - 6.

8. A computer program product comprising:
a computer usable medium having computer readable program code embodied therein configured to integrate an application program interface into a virtual machine, said computer program product comprising:
computer readable code configured to cause a computer to divide a plug in into a first and second component wherein said first component has only host application specific information and said second component has only host application independent information; and
computer readable code configured to cause a computer to integrate said virtual machine using said second component.

9. The computer program product of claim 8 wherein said virtual machine is a Java virtual machine.

10. The computer program product of at least one of the claims 8 and 9 wherein said first and second components use a common address space.

11. The computer program product of at least one of the claims 8 to 10 wherein said first and second components do not use a common address space.

12. The computer program product of claim 11 wherein said first and second components communicate via a shared memory transport.

13. A virtual machine integration comprising:
a plug in divided into a first and second component wherein said first component has only host application specific information and said second component has only host application independent information; and
a virtual machine configured to be integrated using said second component.

14. The virtual machine integration of claim 13 wherein said virtual machine is a Java virtual machine.

15. The virtual machine integration of at least one of the claims 13 and 14 wherein said first and second components use a common address space.

16. The virtual machine integration of at least one of the claims 13 to 15 wherein said first and second components do not use a common address space.

17. The virtual machine integration of claim 16 wherein said first and second components communicate via a shared memory transport.

18. A system for using an application program interface to integrate a virtual machine into a host application comprising:
a plug in divided into a first and second component wherein said first component has only host application specific information and said second component has only host application independent information; and
said virtual machine configured to be integrated into said host application using said second component.

19. The system of claim 18 wherein said virtual machine is a Java virtual machine.

20. The system of at least one of the claims 18 and 19 wherein said first and second components use a common address space.

21. The system of at least one of the claims 18 to 20 wherein said first and second components do not use a common address space.

22. The system of claim 21 wherein said first and second components communicate via a shared memory transport.
